# EUROPÄISCHE PATENTANMELDUNG

(11) **EP 2 852 030 A1**
(43) Veröffentlichungstag der Anmeldung: **25.03.2015**
(21) Anmeldenummer: 13185286.5
(22) Anmeldetag: 20.09.2013
(51) Int. Cl.: H02K 1/20, H02K 9/00, H02K 3/24

(54) **Kühlvorrichtung für eine elektrische Maschine und elektrische Maschine umfassend eine Kühlvorrichtung**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Lehmann, Christoph, 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Die vorliegende Erfindung offenbart eine Kühlvorrichtung (1) für eine elektrische Maschine (100) mit einem Stator (2) mit einer Statorwicklung (2a), mit mindestens einem Statorblechpaket (2b) und mindestens einem Statorwicklungskopf (2c), wobei die Kühlvorrichtung (1) eine Vielzahl von mit einem Kühlmittel durchströmbaren Kanälen (6a) umfasst, die an einem ersten Ende (7a) mit einem Druckspeicher (10a) verbunden sind und an ihrem zweiten Ende (7b) in eine Prallkühlplatte (8a) und/oder in einem Kanal eines Statorwicklungskopfs (2c) enden. Weiter offenbart die vorliegende Erfindung eine elektrische Maschine (100) mit einem Rotor (4) und einem Stator (2) umfassend mindestens eine Statorwicklung (2a) mit mindestens einem Statorblechpaket (2b) und mindestens einem Statorwicklungskopf (2c); wobei die elektrische Maschine (100) eine erfindungsgemäße Kühlvorrichtung (1) umfasst. Die elektrische Maschine kann ein Generator und/oder ein Motor sein.

## Beschreibung

Die Erfindung betrifft eine Kühlvorrichtung für elektrische Maschinen, insbesondere Generatoren, und eine elektrische Maschine mit einer erfindungsgemäßen Kühlvorrichtung.

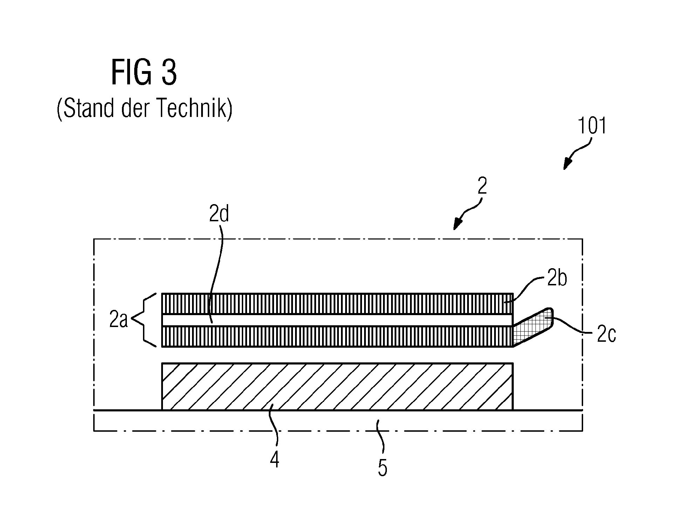

Figur 3 zeigt eine elektrische Maschine 101 gemäß dem Stand der Technik, genauer zeigt Figur 3 einen Querschnitt eines Quadranten einer elektrischen Maschine. Der Aufbau der elektrischen Maschine 101 ist im Allgemeinen rotationssymmetrisch um eine Drehachse 5. Auf der Drehachse 5 befindet sich ein Rotor 4. Konzentrisch bzw. im Wesentlichen konzentrisch um den Rotor 4 ist ein Stator 2 angeordnet, so dass bei einer Drehbewegung der Drehachse 5 eine elektrische Spannung in den Stator 2 induziert wird im Falle eines Generators. Entsprechend kann bei Anlegung einer Wechselspannung an dem Stator 2 der Rotor 4 zu Rotation um die Drehachse 5 angeregt werden, wie dies bei einem Elektromotor, insbesondere einem Drehstrommotor der Fall ist. Typischerweise besteht der Stator 2 aus einer Ständerwicklung bzw. Statorwicklung 2a. Die Statorwicklung 2a besteht aus einzelnen Blechpaketen 2b (auch Statorblechpakete oder Ständerblechpakete) und mindestens einem Statorwicklungskopf 2c (auch Ständerwicklungskopf oder Wicklungskopf). Typischerweise sind einzelne der Blechpakete 2b voneinander beabstandet um einen Abstand 2d. Im Betrieb der elektrischen Maschine 101 entstehen aufgrund von Verlusten bei der Umwandlung von mechanischer in elektrischer Energie (und umgekehrt) Wärme, die es erforderlich macht, die elektrische Maschine 101 effizient zu kühlen. Die Kühlung ist erforderlich, da durch die verwendeten Materialien zur Isolation des Gehäuses von Strom und/oder spannungsführenden Teilen Isolationsmaterialien verwendet werden, die nur bis zu einer Grenzwerttemperatur ihre Isolationswirkung behalten. Werden die Grenzwerttemperpaturen überschritten, so ist die Isolation nicht mehr möglich, und es kommt zu einem Kurzschluss und möglicherweise zu einer Beschädigung der elektrischen Maschine 101. Darüber hinaus stellt eine solche elektrische Maschine 101, deren Isolationsmaterialien nicht mehr wirken, ein hohes Sicherheitsrisiko dar, da zum Beispiel das Gehäuse mit elektrischen Spannungen und/oder Strömen beaufschlagt wird, was ein Unfallrisiko bedeutet. Um die elektrische Maschine 101 bei einer bestimmten Leistung betreiben zu können, muss eine ausreichende Kühlung erfolgen, so dass die Grenzwerttemperaturen nicht überschritten werden. Daher ist es zur Steigerung der Leistung einer solchen elektrischen Maschine 101 erforderlich, dass eine effiziente Kühlung aktiver Bauteile der elektrischen Maschine 101, insbesondere des Rotors 4, des Stators 2 und/oder des Statorwicklungskopfs 2c erforderlich ist. Dazu kann zum Beispiel ein auf der Drehachse und/oder ein am Gehäuse angebrachtes Gebläse (nicht gezeigt in Figur 3) verwendet werden, um einen Kühlmittelstrom von außerhalb der elektrischen Maschine 101 ins Innere der elektrischen Maschine zu fördern und/oder in der Maschine umzuwälzen. Durch eine Geometrie der einzelnen aktiven Bauteile Rotor 4, Stator 2 und/oder Statorwicklungskopf 2c ergibt sich ein bestimmtes Verhältnis, in welchem der Kühlmittelmassestrom einzelne dieser aktiven Komponenten anströmt und eine entsprechende Kühlung bewirkt. Dieses Verhältnis der einzelnen Massenströme von Kühlmittel kann für die elektrische Maschine 101 im Allgemeinen nicht mehr verändert werden. Dadurch ergibt sich eine Beschränkung der Kühlung einzelner der aktiven Bauteile. Dem Fachmann ist bekannt, dass durch einen entsprechenden thermodynamischen Kreisprozess Wärme, die von dem Kühlmittel, zum Beispiel Gas und/oder Kühlflüssigkeit in der elektrischen Maschine 101 aufgenommen wird, durch einen entsprechenden Kühler entzogen werden kann, und erneut der elektrischen Maschine 101 zugeführt werden kann, so dass eine kontinuierliche Kühlung der elektrischen Maschine 101 möglich ist. Die Erfindung hat es sich daher zur Aufgabe gemacht, eine Kühlvorrichtung derart vorzusehen, dass insbesondere der Stator 2 gezielt gekühlt werden kann. Ebenso schlägt die vorliegende Erfindung eine elektrische Maschine vor, die eine erfindungsgemäße Kühlvorrichtung zur Kühlung des Stators umfasst.

Die Kühlvorrichtung für eine elektrische Maschine ist insbesondere eine Kühlvorrichtung für eine elektrische Maschine mit einem Stator, wobei der Stator mindestens eine Statorwicklung mit mindestens einem Ständerblechpaket und mindestens einem Ständerwicklungskopf umfasst. Der Stator wird im Folgenden auch als Ständer bezeichnet, entsprechend der Ständerwicklungskopf auch als Statorwicklungskopf und das Ständerblechpaket auch als Statorblechpaket. Die entsprechenden Begriffe sind im Folgenden als Synonym zu verstehen.

Die erfindungsgemäße Kühlvorrichtung umfasst eine Vielzahl von mit Kühlmittel durchströmbaren Kanälen. Die Vielzahl der Kanäle ist an einem ersten Ende bzw. Endabschnitt mit einem Druckspeicher verbunden. Ein zweites Ende bzw. ein zweiter Endabschnitt der Vielzahl der Kanäle mündet entweder in einer Prallkühlplatte und/oder endet in einem Kanal eines Ständerwicklungskopfs, wobei diese Funktion vorzugsweise die Prallkühlplatte übernimmt. Eine derartige Kühlvorrichtung ist vorteilhaft, da sich dadurch eine gezielte Kühlung des Stators einstellen lässt. Bevorzugt kann eine Auswahl der Vielzahl von Kanälen zwischen einzelnen der Ständerblechpakete verlaufen.

Ebenso kann alternativ oder zusätzlich eine Auswahl der Vielzahl von Kanälen in Öffnungen innerhalb des Stators 2 verlaufen, zum Beispiel in Kanälen zwischen einzelnen der Statorblechpakete verlaufen. Die Möglichkeit zu wählen, welche Auswahl der Vielzahl von Kanälen in Kanälen zwischen einzelnen der Ständerblechpakete und/oder in Öffnungen des Stators, insbesondere des Statorwicklungskopfs verläuft, lässt sich die relative Kühlung von einzelnen der Ständerblechpakete zu einer Kühlung einzelner der Ständerwicklungsköpfe einstellen. Dabei kann die erste Auswahl der Kanäle, die zwischen einzelnen der Ständerblechpakete verlaufen gleich der Auswahl sein, die in Öffnungen des Statorwicklungskopfs verläuft. Ebenso kann die Auswahl der in den Öffnungen des Statorwicklungskopfs verlaufenden Kanäle auch eine Auswahl aus der zwischen einzelnen der Ständerblechpakete verlaufenden Vielzahl der Kanäle sein.

Ebenso und ohne Einschränkung kann eine zweite Auswahl der Vielzahl der Kanäle in Kanälen innerhalb des Stators verlaufen. Wie bereits ausgeführt, lässt sich eine durch entsprechende Auswahlen der Vielzahl der Kanäle eine Gewichtung einer Kühlung einzelner der Ständerblechpakete zu einzelnen der Statorwicklungsköpfe erreichen.

Bevorzugt umfasst die Kühlvorrichtung Auslassmittel. Die Auslassmittel können an der Prallkühlplatte vorgesehen sein. Alternativ oder zusätzlich können die Auslassmittel an den mindestens einen Kanal des Ständerwicklungskopfs vorgesehen sein, indem mindestens eine Auswahl der Vielzahl der Kanäle endet.

Bevorzugt umfasst die Kühlvorrichtung ein Kühlmittel, das von dem Druckspeicher zu dem zweiten Ende der Kanäle strömt, sofern an dem zweiten Ende der Kanäle ein geringerer statischer Druck als in dem Druckspeicher herrscht. Das Vorsehen eines geringeren Drucks an dem zweiten Ende der Kanäle ist deshalb von Vorteil, da so eine Richtung, in welche das Kühlmittel fließt, definiert wird, so dass einem entsprechenden Kühlkreis eine Flussrichtung des Kühlmittels aufprägbar ist.

Vorzugsweise können die Auslassmittel so ausgelegt sein, dass im Kühlbetrieb der statische Druck an dem zweiten Ende der Kanäle geringer ist als im Druckspeicher 10a. Ein entsprechendes Vorsehen der Auslassmittel ist vorteilhaft, da die gewünschte Fließrichtung des Kühlmittels in dem thermodynamischen Kreisprozess erreicht wird. Darüber hinaus ergibt sich bei ausreichender Auslegung bzw. Dimensionierung der Auslassmittel, zum Beispiel an der Prallkühlplatte eine effektive Kühlung des Stators.

Bevorzugt kann die Prallkühlplatte an einem Endabschnitt des mindestens einen Ständerblechpakets anbringbar sein. Dadurch lässt sich eine effiziente Wärmeübertragung zwischen der Prallkühlplatte und dem mindestens Ständerblechpaket erreichen, was zu einer effektiven Kühlung des Ständerblechpakets führt.

Bevorzugt kann die Kühlvorrichtung eine zweite Vielzahl von mit einem Kühlmittel durchströmbaren Kanälen umfassen, die in einem ersten Ende oder Endabschnitt mit einem zweiten Druckspeicher verbunden sind, und an einem zweiten Ende oder Endabschnitt jeweils in einer zweiten Prallkühlplatte und/oder in einem Kanal des Ständerwicklungskopfs enden.

Vorteilhaft an dieser Ausführungsform ist, dass beide Enden eines Ständerwicklungspakets effektiv durch die erste und die zweite Prallkühlplatte gekühlt werden können. Ebenso können Ständerwicklungsköpfe durch entweder die zweiten Enden der ersten Kanäle und/oder die zweiten Enden der zweiten Kanäle, die jeweils in einem Kanal bzw. einem Durchgang des Ständerwicklungskopfs enden, effektiv gekühlt werden.

Bevorzugt kann auch für die zweiten Kanäle zumindest eine Auswahl zwischen einzelnen der Ständerblechpakete verlaufen und/oder eine Auswahl der zweiten Kanäle in Öffnungen des Ständerblechpakets verlaufen. Alternativ oder zusätzlich kann eine zweite Auswahl der zweiten Kanäle zumindest abschnittsweise in Kanälen des Statorwicklungskopfs verlaufen. Eine derartige Anordnung der ersten Auswahl der zweiten Kanäle und/oder der zweiten Auswahl der zweiten Kanäle ermöglicht es eine Gewichtung der relativen Kühlung der Ständerwicklungspakete zu einer Kühlung der Ständerwicklungsköpfe einzustellen.

Weiter bevorzugt kann die zweite Prallkühlplatte der Kühlvorrichtung an einem zweiten Endabschnitt des Ständerblechpakets (auch Statorblechpaket oder Blechpaket) anbringbar sein. Daher lässt sich vorteilhaft das Ständerwicklungspaket an beiden Enden effektiv mittels der ersten und der zweiten Prallkühlplatte kühlen, was einen effizienteren Wärmeabtransport ermöglicht.

Wie schon für den ersten Druckspeicher kann auch der zweite Druckspeicher ein Kühlmittel enthalten, das von dem zweiten Druckspeicher zu dem zweiten Ende der zweiten Kanäle strömt, sofern an dem zweiten Ende der zweiten Kanäle ein geringerer statischer Druck als in dem zweiten Druckspeicher herrscht. Eine derartige Ausführungsform ist von Vorteil, da dem thermodynamischen Kreisprozess zur Kühlung durch die erfindungsgemäße Kühlvorrichtung eine Richtung des Kühlmittelflusses aufgeprägt wird, ohne dass dafür besondere Antriebsmittel, etwa in Form von Pumpen erforderlich wären.

Bevorzugt kann die Kühlvorrichtung zweite Auslassmittel umfassen, die so ausgelegt sind, dass im Kühlbetrieb der statische Druck an dem zweiten Ende der zweiten Kanäle geringer ist als im zweiten Druckspeicher, wie dies bereits für die ersten Auslassmittel erläutert wurde. Sowohl für die ersten Auslassmittel als auch für die zweiten Auslassmittel ist Kühlbetrieb so auszulegen, dass durch die Kühlvorrichtung eine messbare Kühlung der elektrischen Maschine stattfindet. Dies kann im Betrieb der elektrischen Maschine und/oder bei Stillstand der elektrischen Maschine erfolgen.

Bevorzugt können sich in einer Kühlvorrichtung gemäß der Erfindung in einer umfänglichen Richtung innerhalb des Stators 2 erste Kanäle und zweite Kanäle abwechseln, was eine platzsparende Kühlung des Stators ermöglicht. Insbesondere kann durch die Verwendung der beiden Kühlkreisläufe und/oder die abwechselnde Anordnung von ersten Kanälen und/oder zweiten Kanälen in vorteilhafter Weise eine gleichmäßige Kühlung des Stators erfolgen. Darüber hinaus bezieht sich die Erfindung auf eine elektrische Maschine. Diese elektrische Maschine umfasst einen Rotor und einen Stator, wobei der Stator mindestens eine Ständerwicklung mit mindestens einem Ständerblechpaket und mindestens einem Ständerwicklungskopf umfasst. Die erfindungsgemäße elektrische Maschine umfasst weiter eine oben beschrieben Kühlvorrichtung gemäß der vorliegenden Erfindung. Bei der erfindungsgemäßen elektrischen Maschine kann es sich vorzugsweise um einen Generator und/oder einen Motor handeln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele die im Zusammenhang mit den Zeichnungen näher erläutert, wobei
- Figur 1: einen Ausschnitt der erfindungsgemäßen Kühlvorrichtung 1 zeigt, die an einem Quadranten eines Stators 2 angebracht ist,
- Figur 2: zeigt eine zweite Ausführungsform der erfindungsgemäßen Kühlvorrichtung 1 an einem Ausschnitt eines Quadranten eines Stators 2 einer elektrischen Maschine 100, und
- Figur 3: zeigt einen Ausschnitt eines Quadranten einer elektrischen Maschine 101 gemäß dem Stand der Technik.

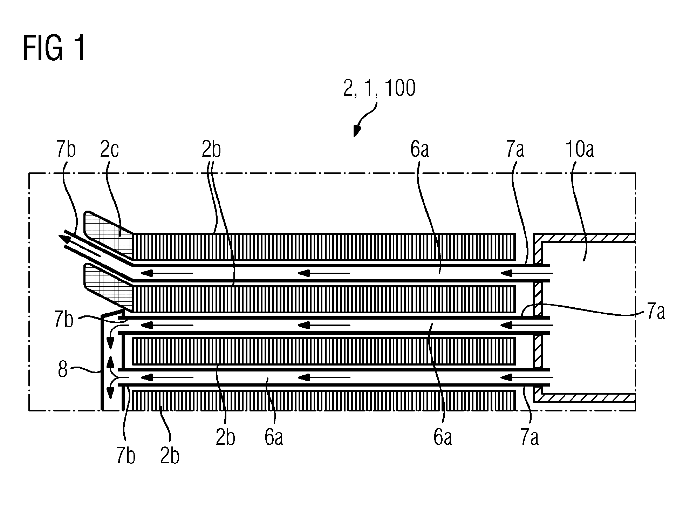

Figur 1 zeigt einen Ausschnitt einer elektrischen Maschine 100, insbesondere einen Ausschnitt eines Stators 2, der eine Kühlvorrichtung 1 gemäß der vorliegenden Erfindung in einer ersten Ausführungsform umfasst. Der Stator 2 besteht aus einer Vielzahl von Ständerblechpaketen 2b (auch Blechpakete oder Statorblechpakete) wie dargestellt. Die einzelnen Ständerblechpakete 2b sind so angeordnet, dass zwischen diesen erste Kanäle 6a verlaufen. Die ersten Kanäle 6a sind an ersten Enden oder ersten Endabschnitten 7a mit einem Druckspeicher 10 verbunden. An zweiten Enden oder zweiten Endabschnitten 7b sind die ersten Kanäle 6a entweder mit einer Prallkühlplatte 8 strömungstechnisch verbunden und/oder in einem Kanal eines Statorwicklungskopfs 2c angeordnet. Sofern in dem Druckbehälter 10 (in Figur 1 rechts gezeigt) ein höherer statischer Druck herrscht als an den zweiten Enden 7b der ersten Kanäle 6a, so fließt ein in dem Druckbehälter 10 befindliches Kühlmittel von dem Druckbehälter 10 hin zu den zweiten Enden 7b der ersten Kanäle 6a, wie durch die Pfeile angedeutet. Dem Fachmann ist bekannt, wie die Prallkühlplatte 8 zu dimensionieren ist, um den geringeren Druck an den in der Prallkühlplatte 8 endenden zweiten Enden 7b der Kanäle 6a zu gewährleisten. Dazu können an der Prallkühlplatte 8 geeignete Auslassmittel (nicht gezeigt) vorgesehen sein, so dass eine wirkungsvolle Kühlung, das heißt eine Prallkühlung erreicht werden kann. Durch die Prallkühlung werden die benachbarten Ständerblechpakete 2b, die in Kontakt sind, mit der Prallkühlplatte 8 gekühlt. Es ist von Interesse, eine Strömung des Kühlmittels aufrecht zu erhalten, um die Wärme effektiv aus dem Stator 2 abzuleiten. Weiter ist durch den an der Prallkühlplatte 8 und/oder an den zweiten Enden 7b der ersten Kanäle 6a vorgesehenen geringeren statischen Druck gewährleistet, dass das Kühlmittel innerhalb der ersten Kanäle 6a in eine gewünschte Richtung fließt, wodurch der Wärmeabtransport und damit die gewünschte Kühlung der Ständerblechpakete 2b erreicht wird. Für in dem Ständerwicklungskopf 2c endende zweite Enden 7b der ersten Kanäle 6a muss ein ausreichend großer Auslass vorgesehen sein, so dass auch an dem zweiten Ende 7b der in dem Ständerwicklungskopf 2c mündenden ersten Kanälen 6a der geringere statische Druck, das heißt insbesondere geringer als in dem Druckspeicher 10 aufrecht erhalten wird. Dem Fachmann sind geeignete Auslassmittel bekannt, die sicherstellen, dass aus den zweiten Enden 7b ausströmendes Kühlmittel in ausreichender Menge abgeführt werden kann, um im Kühlbetrieb den geringeren statischen Druck an den zweiten Enden 7b der ersten Kanäle 6a sicherzustellen.

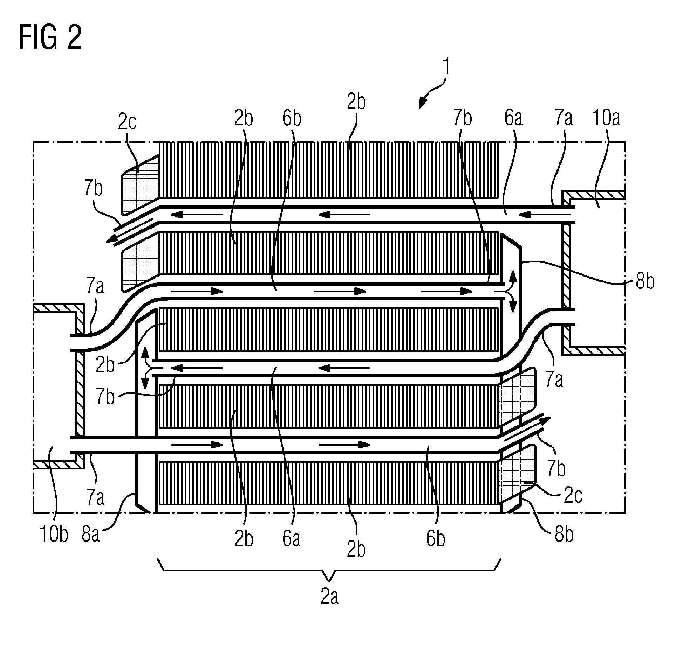

Figur 2 zeigt beispielhaft eine Kühlvorrichtung 1 gemäß einer weiteren Ausführungsform der Erfindung, die in einer elektrischen Maschine 100 angebracht ist, wobei Figur 2, wie schon Figur 1 nur einen Schnitt eines Quadranten der elektrischen Maschine 100 zeigt, soweit es für das Verständnis der erfindungsgemäßen Kühlvorrichtung 1 und/oder der erfindungsgemäßen elektrischen Maschine 100 erforderlich ist. Zusätzlich zu den ersten Kanälen 6a zwischen einem ersten Druckspeicher 10a und einer ersten Druckplatte 8a und/oder einem ersten Ständerwicklungskopf 2c ist eine Vielzahl von zweiten Kanälen 6b vorgesehen, die von einem zweiten Druckspeicher 10b ausgehen. Erste Enden 7a der zweiten Kanäle 6b enden in dem zweiten Druckspeicher 10b. Ein zweites Ende 7b der zweiten Kanäle 6b endet in einer zweiten Prallkühlplatte 8b und/oder in einem Ständerwicklungskopf 2c. Die Anordnung von Ständerwicklungskopf 2c und/oder der ersten Prallkühlplatte 8a, sowie der zweiten Prallkühlplatte 8b ist in Figur 2 nur beispielhaft gegeben und soll das Prinzip der zweiten Ausführungsform der Erfindung erläutern. Durch die Verwendung von erstem und zweiten Druckspeicher 10a, 10b in Verbindung mit erster und zweiter Prallkühlplatte 8a, 8b lässt sich von beiden Seiten, das heißt von beiden Enden der jeweiligen Ständerblechpakete 2b zwischen erster und zweiter Prallkühlplatte 8a, 8b eine effektive Kühlung der Statorblechpakete 2b erreichen. Aus der effektiveren Kühlung der Statorblechpakete 2b ergibt sich auch eine effektivere Kühlung des Stators. Es ist von Interesse, an den jeweiligen zweiten Endabschnitten 7b der ersten Kanäle 6a und/oder an den jeweiligen zweiten Endabschnitten 7b der zweiten Kanäle 6b einen geringeren statischen Druck vorzusehen als in dem jeweils verbundenen ersten oder zweiten Druckbehälter 10a, 10b, um dem Kühlmittel im Inneren der ersten Kanäle 6a und/oder im Inneren der zweiten Kanäle 6b eine gewünschte Flussrichtung aufzuprägen und damit ohne weitere Antriebsmittel, etwa in Form von Pumpen, eine Flussrichtung des thermodynamischen Kreisprozesses, wie er zur Kühlung des Stators 2 verwendet wird, vorzusehen.

Der Fachmann wird verstehen, dass auch andere Anordnung mit zwei Prallkühlplatten 8a, 8b und zwei Druckbehältern 10a, 10b, möglich sind. Es bietet sich an, in einer umfänglichen Richtung des Stators 2 erste Kanäle 6a und zweite Kanäle 6b abzuwechseln. Ohne Einschränkungen könnten auch mehr als nur erste und zweite Kanäle 6a, 6b verwendet werden, die jeweils mit einem weiteren Druckbehälter (nicht gezeigt) und ggf. einer weiteren Prallkühlplatte (nicht gezeigt) verbunden sind.

Der Fachmann wird verstehen, dass als Kühlmittel für die Ausführungsformen der Erfindung entweder ein gasförmiges Kühlmittel verwendet werden kann, zum Beispiel Luft, Sauerstoff und/oder Wasserstoff. Wasserstoff wäre insbesondere von Vorteil aufgrund der hohen Wärmekapazität und damit der hohen Fähigkeit Wärme aus den Ständerblechpaketen 2b und/oder den Ständerwicklungsköpfen 2c zu entnehmen. Dem Fachmann ist bekannt, dass bei Verwendung von Wasserstoff als Kühlmittel Sicherheitsvorkehrungen erforderlich sind, um eine Knallgasexplosion zu vermeiden. Derartige Sicherheitsvorrichtungen sind dem Fachmann bekannt, für das Verständnis der vorliegenden Erfindung nicht erforderlich und werden daher im Zusammenhang mit der vorliegenden Erfindung nicht weiter erläutert.

Ebenso wäre es möglich, eine Flüssigkeit als Kühlmittel zu verwenden, die in ersten Kanälen 6a und/oder zweiten Kanälen 6b sowie in weiteren Kanälen strömt. In Betracht kommt in diesem Zusammenhang insbesondere eine nichtleitfähige Flüssigkeit, zum Beispiel destilliertes Wasser. Alternativ und/oder zusätzlich kann auch Generatorenöl verwendet werden. Bei der Verwendung von elektrisch leitfähigen Kühlmitteln, die insbesondere aus den zweiten Enden 7b innerhalb der Ständerwicklungsköpfe 2c ausströmen, ist sicherzustellen, dass dieses Kühlmittel keinen Kurzschluss zwischen elektrisch leitenden Komponenten der Statorwicklung 2a bzw. des Stators 2 bewirkt. Ebenso muss ausgeschlossen werden, dass ein leitfähiges Kühlmittel einen Kurzschluss zwischen dem Stator 2 und/oder dem Rotor bewirkt, ebenso wie zwischen anderen elektrisch leitfähigen Komponenten der elektrischen Maschine 1. Entsprechende Vorkehrungen sind dem Fachmann jedoch bekannt und werden daher im Zusammenhang mit der vorliegenden Beschreibung nicht weiter erläutert.

Obwohl die erfindungsgemäße Kühlvorrichtung 1 im Zusammenhang mit Statorblechen 2b (auch Statorblechpakete, Ständerbleche, Ständerblechpakete, oder Ständer) erläutert wurde, ist es ohne Einschränkung denkbar, die Kühlvorrichtung 1 an Blechpaketen des Rotors 4 vorzusehen. Allerdings müssten bei einer erfindungsgemäßen Kühlung des Rotors 4 die Druckbehälter 10a, 10b auf der Drehachse 5 angebracht sein und mit der Rotation der Drehachse 5 mitrotieren, was eine Anordnung der Kühlvorrichtung 1 auf dem Rotor 4 erschwert.

Für den Fachmann ist offensichtlich, dass die im Zusammenhang mit Figur 1 und 2 beschriebene Kühlvorrichtung 1 mit weiteren Kühlvorrichtungen einer elektrischen Maschine 100 kombiniert werden kann, um so eine erforderliche Kühlung des Stators 2, des Rotors 4 und/oder der Ständerwicklungsköpfe 2c zu erreichen.

Wie in Figuren 1 und 2 gezeigt offenbart die vorliegende Erfindung auch eine elektrische Maschine 100 mit einem Rotor 4 (zu sehen in Fig. 3) und einem Stator 2, wobei der Stator mindestens eine Statorwicklung 2a umfasst mit mindestens einem Statorblechpaket 2b, wie in Figuren 1 und 2 gezeigt, wobei die elektrische Maschine 100 die erfindungsgemäße Kühlvorrichtung 1, wie im Zusammenhang mit Figuren 1 und 2 erläutert, umfasst.

Bei der erfindungsgemäßen elektrischen Maschine kann es sich ohne Einschränkung um einen Generator und/oder einen Motor handeln.

Die vorliegende Erfindung ist nicht auf die ausgeführten Ausführungsbeispiele der Kühlvorrichtung 1 und/oder der elektrischen Maschine 100 beschränkt. Obwohl die Erfindung im Detail durch die bevorzugten Ausführungsbeispiele der Kühlvorrichtung 1 sowie bevorzugte Ausführungsformen der elektrischen Maschine 100 illustriert und beschrieben wurde, ist die Erfindung nicht durch die hierin offenbarten Beispiele eingeschränkt. Vielmehr sind Variationen der hierin offenbarten Ausführungsformen durch den Fachmann ableitbar sind, ohne den Schutzumfang der Erfindung zu verlassen.

## Patentansprüche

1. Kühlvorrichtung (1) für eine elektrische Maschine (100) mit einem Stator (2) umfassend mindestens eine Statorwicklung (2a), mit mindestens einem Statorblechpaket (2b) und mindestens einem Statorwicklungskopf (2c); die Kühlvorrichtung (1) umfassend:
- eine Vielzahl von mit einem Kühlmittel durchströmbaren Kanälen (6a), die an einem ersten Endabschnitt (7a) mit einem Druckspeicher (10a) verbunden sind, und an ihrem zweiten Endabschnitt (7b) in eine Prallkühlplatte und/oder in einem Kanal eines Ständerwicklungskopfs (2c) enden.

2. Kühlvorrichtung (1) nach Anspruch 1,
wobei zumindest eine Auswahl der Vielzahl von Kanälen (6a) zwischen einzelnen der Ständerblechpaketen (2b) verläuft; und/oder zumindest eine Auswahl der Vielzahl von Kanälen (6a) in Öffnungen des Statorwicklungskopfs (2c) verläuft.

3. Kühlvorrichtung (1) nach einem der vorhergehenden Ansprüche,
wobei Auslassmittel an der Prallkühlplatte (8a) und/oder dem mindestens einen Kanal des Ständerwicklungskopfs (2c) vorgesehen sind.

4. Kühlvorrichtung (1) nach einem der vorhergehenden Ansprüche,
wobei ein Kühlmittel von dem Druckspeicher (10a) zu dem zweiten Endabschnitt (7b) der Kanäle (6a) strömt, sofern an dem zweiten Endabschnitt (7b) ein geringerer statischer Druck als in dem Druckspeicher herrscht.

5. Kühlvorrichtung (1) gemäß Anspruch 3 oder 4,
wobei die Auslassmittel so ausgelegt sind, dass im Kühlbetrieb der statische Druck an dem zweiten Endabschnitt (7b) der Kanäle (6a) geringer ist als in dem Druckspeicher (10a).

6. Kühlvorrichtung nach einem der vorhergehenden Ansprüche, wobei die Prallkühlplatte an einem Endabschnitt des mindestens einen Ständerblechpakets (2b) anbringbar ist.

7. Kühlvorrichtung (1) gemäß einem der vorhergehenden Ansprüche, weiter umfassend:
- eine Vielzahl von mit einem Kühlmittel durchströmbaren zweiten Kanälen (6b) die an einem ersten Ende (7a) mit einem zweiten Druckspeicher (10b) verbunden sind, und an einem zweiten Endabschnitt (7b) in einer zweiten Prallkühlplatte (8b) und/oder in einem Kanal des mindestens einen Ständerwicklungskopfs (2c) enden.

8. Kühlvorrichtung (1) gemäß Anspruch 7,
wobei zumindest eine Auswahl der zweiten Kanäle (6b) zwischen einzelnen der Ständerblechpakete (2a) verläuft und/oder zumindest eine Auswahl der zweiten Kanäle (6b) in Öffnungen der Ständerblechpakete verläuft.

9. Kühlvorrichtung nach einem der Ansprüche 7 oder 8, wobei zumindest eine zweite Auswahl der zweiten Kanäle (6b) zumindest abschnittsweise in Kanälen des Statorwicklungskopfs (2c) verläuft.

10. Kühlvorrichtung gemäß einem der Ansprüche 7 bis 9, wobei die zweite Prallkühlplatte (8b) an einem zweiten Endabschnitt (7b) des Ständerblechpakets (2b) anbringbar ist.

11. Kühlvorrichtung (1) gemäß einem der Ansprüche 7 bis 10, wobei der zweite Druckspeicher (10b) ein Kühlmittel enthält, das von dem zweiten Druckspeicher (10b) zu dem zweiten Endabschnitt (7b) der zweiten Kanäle (6b) strömt, sofern an den zweiten Endabschnitten (7b) der zweiten Kanäle (6b) ein geringerer statischer Druck als in dem zweiten Druckspeicher (10b) herrscht.

12. Kühlvorrichtung (1) gemäß einem der Ansprüche 7 bis 11,
wobei zweite Auslassmittel vorgesehen sind, die so ausgelegt sind, dass im Kühlbetrieb der statische Druck an den zweiten Endabschnitten (7b) der zweiten Kanäle (6b) geringer ist als im zweiten Druckspeicher.

13. Kühlvorrichtung (1) gemäß einem der Ansprüche 8 bis 13, wobei sich in einer umfänglichen Richtung erste Kanäle (6a) und zweite Kanäle innerhalb des Stators (2), insbesondere zwischen Statorblechpaketen (2b) abwechseln.

14. Elektrische Maschine (100) umfassend einen Rotor (4) und einen Stator (2) mit mindestens einer Statorwicklung (2a) mit mindestens einem Statorblechpaket (2b) und mindestens einem Statorwicklungskopf (2c);
wobei die elektrische Maschine (100) eine Kühlvorrichtung (1) gemäß einem der Ansprüche 1 bis 13 umfasst.

15. Elektrische Maschine (100) gemäß Anspruch 14,
wobei die elektrische Maschine (100) ein Generator und/oder ein Motor ist.
